(19) **Europäisches Patentamt**
**European Patent Office**
**Office européen des brevets**

(11) **EP 4 607 234 A1**

(12) **EUROPEAN PATENT APPLICATION**
published in accordance with Art. 153(4) EPC

(43) Date of publication:
**27.08.2025 Bulletin 2025/35**

(51) International Patent Classification (IPC):
**G01S 7/36** (2006.01)

(21) Application number: **22965587.3**

(22) Date of filing: **18.11.2022**

(52) Cooperative Patent Classification (CPC):
**G01S 7/36**

(86) International application number:
**PCT/CN2022/132983**

(87) International publication number:
**WO 2024/103407 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **CHANG, Guanghong
Shenzhen, Guangdong 518129 (CN)**
• **CHENG, Zhiwen
Shenzhen, Guangdong 518129 (CN)**
• **LI, Ting
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **SIGNAL TRANSMISSION METHOD, APPARATUS AND SYSTEM**

(57) This application discloses a signal transmission method and apparatus and a system, and pertains to the field of radar technologies. The method includes: W transmit antennas included in a transmit antenna array transmit W signal sequences. The W signal sequences are sequences obtained through modulation based on different phases. Doppler frequencies corresponding to the W signal sequences are located on N equally spaced Doppler frequency bands, and occupy W Doppler frequency bands in total. In addition, a target periodic autocorrelation sidelobe value $\lambda$ of a code value of the W Doppler frequency bands is less than or equal to a predefined threshold. The target periodic autocorrelation sidelobe value $\lambda$ of the code value of the W Doppler frequency bands reflects a quantity of overlapping Doppler frequencies of different signal sequences of different targets when there are a plurality of targets after the W signal sequences are transmitted. Because $\lambda$ is less than or equal to the predefined threshold, the signal sequences transmitted by using this method can effectively control the quantity of overlapping Doppler frequencies, thereby reducing impact of frequency band crosstalk.

FIG. 7

## Description

## TECHNICAL FIELD

This application relates to the field of radar technologies, and in particular, to a signal transmission method and apparatus and a system.

## BACKGROUND

A gradually mature radar system is widely used in target detection as radar technologies develop. The radar system transmits a signal sequence to the outside by using a transmit antenna. The signal sequence is reflected by a detected target to form an echo sequence, and target speed estimation is implemented based on a Doppler frequency of the echo sequence. The Doppler frequency of the echo sequence is a Doppler frequency corresponding to the signal sequence. However, during target detection, the radar system may use a plurality of transmit antennas to transmit a plurality of signal sequences. For example, there are a plurality of transmit antennas in a transmit antenna array included in a multiple-input multiple-output (multiple-input multiple-output, MIMO) radar system. This type of radar system may obtain a plurality of echo sequences. When the plurality of signal sequences are modulated in a Doppler frequency division multiplexing (Doppler frequency division multiplexing, DDM) manner, Doppler frequencies of different echo sequences are located at Doppler frequency points on different Doppler frequency bands.

When the plurality of transmit antennas are used to perform target detection, there may be a case that a plurality of targets are at a same distance. In this case, one signal sequence is reflected to form a plurality of echo sequences, and when movement speeds of detected targets meet a specific condition, Doppler frequencies of different echo sequences of different targets are the same. That is, the Doppler frequencies of different echo sequences of different targets overlap at a Doppler frequency point on a same Doppler frequency band. As a result, signal quality is affected.

Therefore, a signal transmission method is needed to reduce a quantity of overlapping Doppler frequencies of echo sequences when there are a plurality of targets.

## SUMMARY

This application provides a signal transmission method and apparatus and a system, to reduce a quantity of overlapping Doppler frequencies of echo sequences when there are a plurality of targets.

According to a first aspect, this application provides a signal transmission method. The method is applied to a transmit antenna array. The transmit antenna array includes W transmit antennas, where W is a positive integer greater than 1. The method includes: The W transmit antennas included in the transmit antenna array transmit W signal sequences. The W signal sequences are sequences obtained through modulation based on different phases. Doppler frequencies corresponding to the W signal sequences are located on W Doppler frequency bands in N equally spaced Doppler frequency bands, where N is a positive integer greater than 1, and N is greater than or equal to W. In addition, a target periodic autocorrelation sidelobe value $\lambda$ of a code value of the W Doppler frequency bands is less than or equal to a predefined threshold.

The target periodic autocorrelation sidelobe value $\lambda$ of the code value of the W Doppler frequency bands reflects a quantity of overlapping Doppler frequencies of different signal sequences of different targets when there are a plurality of targets after the W signal sequences are transmitted. Because $\lambda$ is less than or equal to the predefined threshold, the signal sequences transmitted by using this method can effectively control the quantity of overlapping Doppler frequencies corresponding to the signal sequences, thereby reducing impact of frequency band crosstalk.

According to a second aspect, a signal transmission apparatus is provided. The apparatus is used in a transmit antenna array. The transmit antenna array includes W transmit antennas, where W is a positive integer greater than 1. The apparatus includes: a transmitting module, configured for the W transmit antennas to transmit W signal sequences. The W signal sequences are obtained through modulation based on different phases. Doppler frequencies corresponding to the W signal sequences are located on W Doppler frequency bands in N equally spaced Doppler frequency bands, where N is a positive integer greater than 1, and N is greater than or equal to W. A target periodic autocorrelation sidelobe value $\lambda$ of a code value of the W Doppler frequency bands is less than or equal to a predefined threshold.

In a possible implementation of the first aspect or the second aspect, a phase of any signal sequence in the W signal sequences is determined based on the code value of the W Doppler frequency bands and an angle offset value corresponding to the any signal sequence. The angle offset value is obtained by dividing, into N equal parts, an angle period corresponding to the any signal sequence. The phase that needs to be used when the signal sequence is obtained through modulation is determined by using the code value of the W Doppler frequency bands and the angle period corresponding to the signal sequence, to ensure modulation execution and improve reliability.

In a possible implementation of the first aspect or the second aspect, N is determined based on a quantity of signal statuses indicated by a signal modulation algorithm of the transmit antenna array. The quantity of signal statuses indicates a quantity of statuses of signals modulated by using the signal modulation algorithm. A total quantity N of Doppler frequency bands is determined based on the quantity of signal statuses, so that a Doppler frequency corresponding to a signal sequence in each status can be located on one Doppler frequency band, thereby ensuring that target speed estimation is performed based on the Doppler frequency, and improving reliability.

In a possible implementation of the first aspect or the second aspect, when the quantity of signal statuses meets a frequency band requirement corresponding to the transmit antenna array, N is the quantity of signal statuses, or when the quantity of signal statuses does not meet a frequency band requirement corresponding to the transmit antenna array, N is a quantity that meets the frequency band requirement and that is obtained through numerical extension performed on the quantity of signal statuses. N is determined based on the frequency band requirement corresponding to the transmit antenna array, to ensure that the transmit antenna array supports transmission of the signal sequences. In addition, for different results of whether the frequency band requirement is met, there are different manners of determining N, which are highly flexible and widely universal.

In a possible implementation of the first aspect or the second aspect, the code value of the W Doppler frequency bands includes W elements that are assigned a first value and N-W elements that are assigned a second value. One element corresponds to one Doppler frequency band. The first value indicates that the corresponding Doppler frequency band is occupied by the Doppler frequency corresponding to the signal sequence. The second value indicates that the corresponding Doppler frequency band is not occupied by the Doppler frequency corresponding to the signal sequence. The first value and the second value are different values. The code value of the W Doppler frequency bands represents a position, on the N Doppler frequency bands, of a Doppler frequency corresponding to each signal sequence, and representation of the W Doppler frequency bands is clearer and more accurate. The first value may be 1, and the second value may be 0. Specific values of the first value and the second value are not limited in this application.

In a possible implementation of the first aspect or the second aspect, the predefined threshold is 1. A maximum quantity of overlapping Doppler frequencies corresponding to different signal sequences of different targets is controlled to be 1, to reduce the quantity of overlapping Doppler frequencies. A target speed estimation result obtained based on a smaller quantity of overlapping Doppler frequencies is more accurate.

In a possible implementation of the first aspect or the second aspect, when N is 8, W is 3, the code value of the W Doppler frequency bands is either of {11010000} and {11000010}. One element in the code value of the W Doppler frequency bands corresponds to one Doppler frequency band. 1 is the first value indicating that the corresponding Doppler frequency band is occupied by the Doppler frequency corresponding to the signal sequence. 0 is the second value indicating that the corresponding Doppler frequency band is not occupied by the Doppler frequency corresponding to the signal sequence. There are a plurality of possible code values for the W Doppler frequency bands, and flexibility is high.

In a possible implementation of the first aspect or the second aspect, when the code value of the W Doppler frequency bands is {11010000}, the phases used for the W signal sequences are [0°, 0°, 0°, 0°, 0°, 0°, 0°, 0°], [0°, 45°, 90°, 135°, 180°, 225°, 270°, 315°], and [0°, 135°, 270°, 45°, 180°, 315°, 90°, 225°]. The phase used for each signal sequence may be determined by using one code value of the W Doppler frequencies, and efficiency for determining the phase is high.

In a possible implementation of the first aspect or the second aspect, when N is 16, W is 4, the code value of the W Doppler frequency bands is any one of {1101000100000000}, {1101000000001000}, {1100101000000000}, {1100100000010000}, {1100010100000000}, {1100010000000010}, {1100001000000100}, {1100000000101000}, {1100000000100010}, {1100000000010100}, {1011000100000000}, and {1011000000001000}. One element in the code value of the W Doppler frequency bands corresponds to one Doppler frequency band. 1 is the first value indicating that the corresponding Doppler frequency band is occupied by the Doppler frequency corresponding to the signal sequence. 0 is the second value indicating that the corresponding Doppler frequency band is not occupied by the Doppler frequency corresponding to the signal sequence. There are a plurality of possible code values for the W Doppler frequency bands, and flexibility is high. In addition, the signal transmission method may be applicable to a transmit antenna array including three transmit antennas, or may be applicable to a transmit antenna array including four transmit antennas, and is widely universal.

In a possible implementation of the first aspect or the second aspect, when the code value of the W Doppler frequency bands is {1101000100000000}, the phases used for the W signal sequences are [0°, 0°, 0°, 0°, 0°, 0°, 0°, 0°, 0°, 0°, 0°, 0°, 0°, 0°, 0°, 0°], [0°, 22.5°, 45°, 67.5°, 90°, 112.5°, 135°, 157.5°, 180°, 202.5°, 225°, 247.5°, 270°, 292.5°, 315°, 337.5°], [0°, 67.5°, 135°, 202.5°, 270°, 337.5°, 45°, 112.5°, 180°, 247.5°, 315°, 22.5°, 90°, 157.5°, 225°, 292.5°], and [0°, 157.5°, 315°, 112.5°, 270°, 67.5°, 225°, 22.5°, 180°, 337.5°, 135°, 292.5°, 90°, 247.5°, 45°, 202.5°]. The phase used for each signal sequence may be determined by using one code value of the W Doppler frequencies, and efficiency for determining the phase is high.

According to a third aspect, a phase determining method is provided. The phase determining method is used to determine a phase used for a signal sequence transmitted by using any signal transmission method according to the first aspect, and is applied to a coding device. The method includes: determining W based on a quantity of transmit antennas, and determining N based on a signal adjustment algorithm; determining a quantity z of candidate codes that meet distribution of (N, W, Y), where Y represents a predefined threshold; generating, by the coding device, a periodic autocorrelation sequence group of λ based on that z is less than 1, or generating, by the coding device, a unique code of (N, W, Y) based on that z is equal to 1, or generating, by the coding device, a code group of (N, W, Y) based on that z is greater than 1; and generating a phase code sequence (group) based on the periodic autocorrelation sequence group of λ, the unique code, or the code group.

According to a fourth aspect, a transmit antenna array is provided. The transmit antenna array includes W transmit antennas. The W transmit antenna is configured to implement any signal transmission method according to the first aspect.

According to a fifth aspect, a computer program product is provided, including a computer program or instructions. The computer program or the instructions are executed by a processor, so that a computer controls W transmit antennas included in a transmit antenna array to implement any signal transmission method according to the first aspect.

According to a sixth aspect, a radar system is provided. The radar system includes a transmit antenna array. The transmit antenna array includes W transmit antennas. The transmit antenna is configured to implement any signal transmission method according to the first aspect.

According to a seventh aspect, a detection device is provided. The detection device includes a transceiver, a memory, and a processor. The transceiver, the memory, and the processor communicate with each other through an internal connection path. The memory is configured to store instructions. The processor is configured to execute the instructions stored in the memory, to control W transmit antennas included in a transmit antenna array in the transceiver to perform the method according to any one of the first aspect and the possible implementations of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to an eighth aspect, a chip is provided. The chip includes a processor, configured to invoke, from a memory, and run program running instructions or code stored in the memory. A communication device in which the chip is installed includes a transmit antenna array. The transmit antenna array includes W transmit antennas. The transmit antenna is configured to perform the methods in the foregoing aspects.

According to a ninth aspect, another chip is provided. The chip includes an input interface, an output interface, a processor, and a memory. The input interface, the output interface, the processor, and the memory are connected through an internal connection path. The processor is configured to execute code in the memory. When the code is executed, the processor is configured to control, based on a communication connection, W transmit antennas included in a transmit antenna array to perform the methods in the foregoing aspects.

It should be understood that for beneficial effects achieved by the technical solutions of the second aspect to the ninth aspect of this application and corresponding possible implementations, refer to the technical effects of the first aspect and corresponding possible implementations of the first aspect. Details are not described herein again.

**BRIEF DESCRIPTION OF DRAWINGS**

FIG. 1 is a diagram of a transmit antenna array according to an embodiment of this application;
FIG. 2 is a diagram of an application scenario of a radar system according to an embodiment of this application;
FIG. 3 is a diagram of transmitting a signal sequence according to an embodiment of this application;
FIG. 4 is a diagram of a spectrum according to an embodiment of this application;
FIG. 5 is a diagram of a type of frequency band crosstalk according to an embodiment of this application;
FIG. 6 is a statistical diagram of a frequency band crosstalk quantity according to an embodiment of this application;
FIG. 7 is a flowchart of a phase determining method according to an embodiment of this application;
FIG. 8 is a diagram of another spectrum according to an embodiment of this application;
FIG. 9 is diagram of another type of frequency band crosstalk according to an embodiment of this application;
FIG. 10 is statistical diagram of another frequency band crosstalk quantity according to an embodiment of this application;
FIG. 11 is a diagram of a structure of a signal transmission apparatus according to an embodiment of this application; and
FIG. 12 is a diagram of a structure of a detection device according to an embodiment of this application.

## DESCRIPTION OF EMBODIMENTS

Terms used in implementations of this application are only used to explain specific embodiments of this application, but are not intended to limit this application. To make the objectives, technical solutions, and advantages of this application clearer, the following further describes the implementations of this application in detail with reference to the accompanying drawings.

A radar system is a system for implementing target detection by using a transmit antenna array. The transmit antenna array includes a transmit (transmit, TX) antenna, so that a signal sequence is transmitted to the outside by using the transmit antenna. If the signal sequence transmitted to the outside encounters a to-be-detected target, the target reflects the signal sequence to form an echo sequence. The radar system may perform two-dimensional fast Fourier transform (fast Fourier transform, FFT) processing based on the echo sequence, to obtain a Doppler frequency of the echo sequence, and implement target speed estimation. The Doppler frequency of the echo sequence is a Doppler frequency corresponding to the signal sequence.

During target detection, the radar system may use a plurality of transmit antennas. When the radar system transmits a plurality of signal sequences by using the plurality of transmit antennas, the radar system also receives a plurality of echo sequences. In addition, when the plurality of signal sequences are modulated in a Doppler frequency division multiplexing manner, Doppler frequencies of different echo sequences are located at Doppler frequency points on different Doppler frequency bands.

However, during target detection, there may be a case that a plurality of targets are at a same distance. In this case, one signal sequence is reflected by a plurality of targets to form a plurality of echo sequences. In addition, when a detected target moves, a Doppler frequency of an echo sequence of the target changes, and a Doppler frequency band occupied by the Doppler frequency of the echo sequence also moves. In other words, when movement speeds of detected targets meet a specific condition, Doppler frequencies of different echo sequences of different targets are the same. That is, the Doppler frequencies of different echo sequences of different targets overlap at a same Doppler frequency point on a same Doppler frequency band. As a result, a signal is distorted or an error occurs.

This application provides a signal transmission method. In the method, a phase of a transmitted signal sequence is modulated based on correlation between a Doppler frequency band occupied by a Doppler frequency of an echo sequence and a phase of a signal sequence corresponding to the echo sequence, to reduce a quantity of overlapping Doppler frequencies of echo sequences when there are a plurality of targets.

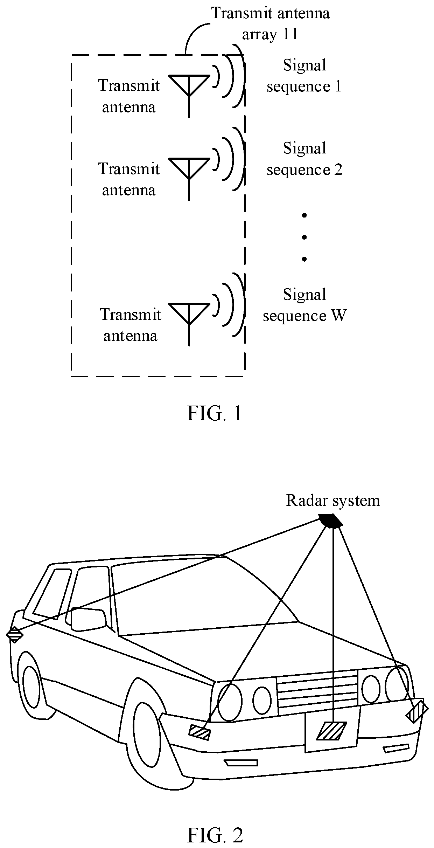

FIG. 1 is a diagram of a transmit antenna array according to an embodiment of this application. A transmit antenna array 11 includes W transmit antennas. The W transmit antenna is configured to transmit W signal sequences, for example, a signal sequence 1, a signal sequence 2, ..., and a signal sequence W in FIG. 1. A value of W is not limited in embodiments of this application. As shown in FIG. 1, W may be any positive integer greater than 2. Alternatively, W may be another value, for example, 2. The W signal sequences transmitted by the W transmit antennas are obtained through modulation based on different phases.

In a possible implementation, the transmit antenna array 11 is a transmit antenna array included in a radar system. The radar system can be configured in any object, to detect targets in different application scenarios. For example, the radar system is configured in a self-driving vehicle, to sense a surrounding environment of the self-driving vehicle. FIG. 2 is a diagram of an application scenario of a radar system according to an embodiment of this application. With reference to FIG. 2, one radar system includes one transmit antenna array 11. A plurality of radar systems are disposed at a plurality of locations of a vehicle body, to transmit signal sequences in different directions, to measure driving environments in different directions.

An embodiment of this application provides a signal transmission method. The signal transmission method may be performed by a transmit antenna array. The transmit antenna array may be the transmit antenna array 11 shown in FIG. 1. The method includes S301.

S301: W transmit antenna arrays transmit W signal sequences. The W signal sequences are obtained through modulation based on different phases. Doppler frequencies corresponding to the W signal sequences are located on W Doppler frequency bands in N equally spaced Doppler frequency bands, where N is a positive integer greater than 1, and N is greater than or equal to W. A target periodic autocorrelation sidelobe value $\lambda$ of a code value of the W Doppler frequency bands is less than or equal to a predefined threshold.

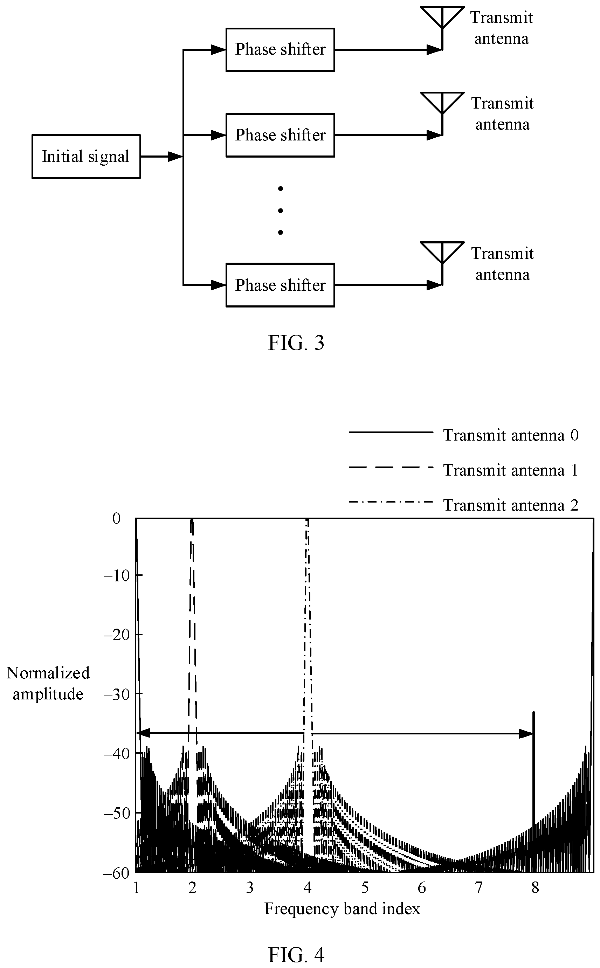

In a possible implementation, the W signal sequences are obtained through modulation performed on an initial signal based on different phases. With reference to FIG. 3, the radar system that includes the transmit antenna array further includes a plurality of phase shifters. A transmitter separately sends the initial signal to the phase shifters. The phase shifters modulate the initial signal based on different phases to obtain signal sequences. The signal sequences obtained after modulation are transmitted by the transmit antennas. For example, the initial signal is a linear frequency modulation signal, for example, a chirp (chirp) signal, and is also referred to as a swept-frequency cosine signal. Certainly, the initial signal may alternatively be another type of encoded signal. In addition, as shown in FIG. 3, W phase shifters may modulate one initial signal to obtain the W signal sequences, and the W phase shifters may alternatively modulate a plurality of initial signals to obtain the W signal sequences.

Optionally, during phase modulation on the initial signal, a phase of any signal sequence in the W signal sequences is determined based on the code value of the W Doppler frequency bands. The code value of the W Doppler frequency bands indicates frequency band distribution of the W Doppler frequency bands in the N equally spaced Doppler frequency bands. The W Doppler frequency bands are Doppler frequency bands on which the Doppler frequencies corresponding to the W signal sequences are located.

For example, a Doppler frequency corresponding to a signal sequence is consistent with a Doppler frequency of an echo sequence formed after the signal sequence is reflected by a target. Therefore, it can be learned that a Doppler frequency band on which the Doppler frequency corresponding to the signal sequence is located is also consistent with a Doppler frequency band occupied by the Doppler frequency of the echo sequence corresponding to the signal sequence. However, the Doppler frequency of the echo sequence is a waveform. Therefore, when the Doppler frequency band occupied by the Doppler frequency of the echo sequence is determined, a Doppler frequency band corresponding to a peak value of the Doppler frequency may be used as the Doppler frequency band of the Doppler frequency.

A Doppler spectrum shown in FIG. 4 is used as an example. Doppler frequencies of three echo sequences are shown in the Doppler spectrum: a Doppler frequency of an echo sequence of a transmit antenna 0, a Doppler frequency of an echo sequence of a transmit antenna 1, and a Doppler frequency of an echo sequence of a transmit antenna 2. With reference to FIG. 4, although the Doppler frequency of the echo sequence of the transmit antenna 2 occupies the Doppler frequency bands of frequency band indexes 1 to 8, a Doppler frequency band corresponding to a peak value of the Doppler frequency of the echo sequence of the transmit antenna 2 is the Doppler frequency band of the frequency band index 4. Therefore, the Doppler frequency of the echo sequence of the transmit antenna 2 occupies the Doppler frequency band of the frequency band index 4 in the spectrum. In other words, a frequency band on which a Doppler frequency corresponding to a signal sequence transmitted by the transmit antenna 2 is located is the Doppler frequency band of the frequency band index 4. A frequency band index is used as an identifier of a Doppler frequency band, and is used to distinguish different Doppler frequency bands. The frequency band index may be a number in FIG. 4, or may be another element, for example, a letter.

It can be learned that before a phase used for any signal sequence is determined, the Doppler frequency band on which the Doppler frequency corresponding to each signal sequence is located further needs to be selected, that is, a code value of the W Doppler frequency bands is determined. In a possible implementation, the code value of the W Doppler frequency bands is determined by a coding device. The coding device may be a coding device disposed inside the radar system, or may be a network device that is independent of the radar system and that establishes a communication connection to the radar system in a wired or wireless network manner, for example, a network device like a server or a terminal that supports data processing. The following uses an example in which the coding device is independent of the radar system to describe a process of determining the code value of the W Doppler frequency bands.

For example, the coding device may determine, based on the predefined threshold, the Doppler frequency bands on which the Doppler frequencies corresponding to the W signal sequences are located, to select frequency band distribution, which meets the predefined threshold, of the W Doppler frequency bands. The coding device further obtains the code value of the W Doppler frequency bands based on the frequency band distribution of the W Doppler frequency bands. For the process of determining the code value, because a predefined threshold Y is involved in the process of determining the code value of the W Doppler frequency bands, the coding device needs to obtain the predefined threshold. The predefined threshold indicates a maximum value of a tolerated quantity of overlapping Doppler frequencies corresponding to signal sequences of different targets when there are a plurality of targets. Overlapping of Doppler frequencies of signal sequences means that the Doppler frequencies of different signal sequences are the same, and occupied Doppler frequency bands are a same Doppler frequency band. Optionally, the predefined threshold may be set by a detected object. The detected object is an object on which the radar system is operated to perform target detection. Optionally, the predefined threshold may alternatively be set based on experience. For example, the predefined threshold is set to 1 or 2 based on experience. Certainly, in a process of setting the predefined threshold, reference may also be made to an implementation environment. The implementation environment is, for example, a quantity of transmit antennas included in the transmit antenna array or a requirement of an application scenario of the radar system on detection precision.

Regardless of which manner is used to set the predefined threshold, the frequency band distribution that meets the predefined threshold may mean that after Doppler frequencies of W echo sequences of one target are distributed on N Doppler frequency bands based on the frequency band distribution, even if there are a plurality of targets, a quantity of overlapping Doppler frequencies of different echo sequences of different targets is not greater than the predefined threshold.

In a possible implementation, a process in which the coding device determines the distribution of the W Doppler frequency bands based on the predefined threshold includes: obtaining at least one candidate code, where one candidate code corresponds to one type of frequency band distribution of the W Doppler frequency bands in the N Doppler frequency bands; calculating a target periodic autocorrelation sidelobe value $\lambda$ of each candidate code in the at least one candidate code, and screening, from the at least one candidate code, a candidate code whose $\lambda$ is less than or equal to the predefined threshold; and determining the code value of the W Doppler frequency bands based on the candidate code obtained through screening.

N indicates a total quantity of Doppler frequency bands included in a Doppler spectrum in a signal period. Because a frequency length corresponding to a Doppler spectrum in a signal period is fixed, when a value of N is determined, a frequency band width of each Doppler frequency band may be further determined based on the total quantity of Doppler frequency bands. For example, the frequency band width is divided by N, to obtain the N equally spaced Doppler frequency bands. By determining the frequency band width and Doppler frequency bands corresponding to different signal sequences, a frequency band width of an interval between Doppler frequency bands corresponding to different signal sequences may be further obtained. However, when the frequency band width of the interval between the Doppler frequency bands corresponding to different signal sequences is appropriate, impact of Doppler frequency overlapping can be effectively reduced. That the frequency band width of the interval between the Doppler frequency bands corresponding to different signal sequences is appropriate means that even if there are a plurality of targets and the targets move, a movement of the Doppler frequency corresponding to the signal sequence in the Doppler spectrum does not cause the Doppler frequency corresponding to the signal sequence to overlap with a Doppler frequency corresponding to another signal sequence, or Doppler frequencies corresponding to some signal sequences overlap.

The foregoing embodiment explains why the coding device needs to determine the total quantity N of frequency bands and select the W Doppler frequency bands. A value of N may be determined based on a quantity of statuses indicated by a signal modulation algorithm of the transmit antenna array, where both N and W are positive integers greater than 1, and N is greater than or equal to W. The signal modulation algorithm is an algorithm for modulating the initial signal to obtain signal sequences. The quantity of signal statuses indicates a quantity of statuses of signals modulated by using the signal modulation algorithm. For example, FIG. 3 shows a relationship between the initial signal and the signal sequences when the signal modulation algorithm is a phase modulation algorithm.

The signal modulation algorithm that is used is not limited in embodiments of this application. The signal modulation algorithm may be the phase modulation algorithm shown in FIG. 3, or may be a frequency modulation algorithm, or is another modulation algorithm. The phase modulation algorithm is, for example, phase shift keying (phase shift keying, PSK). The PSK is also classified into 2PSK, 4PSK, 8PSK, or the like based on different types of phases that can be shifted. 2PSK means that two phases may be obtained during phase modulation, that is, the quantity of signal statuses is 2. Meanings of 4PSK and 8PSK are similar to the meaning of 2PSK. Details are not described herein again. In other words, the coding device may determine, based on the signal modulation algorithm of the transmit antenna array, the quantity of signal statuses indicated by the signal modulation algorithm. Signals in different statuses occupy different Doppler frequency bands in the Doppler spectrum. For example, in the phase modulation algorithm, Doppler frequencies corresponding to signal sequences in different phases occupy different Doppler frequency bands in the Doppler spectrum. Therefore, the Doppler spectrum needs to provide a Doppler frequency band corresponding to a signal sequence in each status. Based on this, the total quantity N of frequency bands may be determined based on the quantity of signal statuses.

In addition, when determining the total quantity of frequency bands, the coding device further refers to a frequency band requirement corresponding to the transmit antenna array in addition to the quantity of signal statuses. In a possible case, the frequency band requirement corresponding to the transmit antenna array is a requirement for a total quantity of frequency bands that is determined by a hardware facility of the radar system in which the transmit antenna array is disposed. For example, the phase shifter included in the radar system needs to ensure that the total quantity of frequency bands is a power of 2, and therefore, it is determined that the frequency band requirement is the power of 2. Optionally, when the quantity of signal statuses meets the frequency band requirement corresponding to the transmit antenna array, N is the quantity of signal statuses. An example in which the frequency band requirement is the power of 2 is used. If the quantity of signal statuses is 16, $16=2^4$, which is the power of 2, and meets the frequency band requirement. Therefore, the quantity 16 of signal statuses may be directly used as the total quantity N of frequency bands. Optionally, when the quantity of signal statuses does not meet the frequency band requirement corresponding to the transmit antenna array, N is a quantity that meets the frequency band requirement and that is obtained through numerical extension performed on the quantity of signal statuses. The example in which the frequency band requirement is the power of 2 is still used. If the quantity of signal statuses is 7, because 7 is not the power of 2, numerical extension needs to be performed on 7 to extend the quantity to 8 that is used as the total quantity N of frequency bands.

After N is determined, the coding device counts the quantity of transmit antennas included in the transmit antenna array. In a normal case, that is, when there is only one target in a same distance unit, one transmit antenna transmits one signal sequence, and one signal sequence is reflected by one target to form one echo sequence. That is, a quantity of Doppler frequencies of the echo sequences shown in the Doppler spectrum is the same as the quantity of transmit antennas, and the quantity of transmit antennas may be used as a quantity W of frequency bands that need to be occupied.

In a possible case, after determining N and W, the coding device further determines whether there is a candidate code that meets (N, W, Y), and continues to obtain the candidate code when a determining result indicates that the candidate code exists. The candidate code that meets (N, W, Y) means that a code length of the candidate code sequence is N, a quantity of first values is W, and a corresponding target periodic autocorrelation sidelobe value is not greater than the predefined threshold Y. Optionally, the coding device determines, by using Johnson bound (Johnson bound) distribution, a quantity z of candidate codes that meet distribution of (N, W, Y). For a case in which z is less than 1, that is, when there is no candidate code that meets (N, W, Y), in this case, although there is no candidate code that meets the predefined threshold Y, a candidate code that meets Y+1, Y+2, or the like can still be found. Therefore, a candidate code with a lowest target periodic autocorrelation sidelobe value $\lambda$ may be used as a periodic autocorrelation sequence of $\lambda$. For example, a candidate code whose $\lambda$ is a minimum positive integer greater than Y is used as the periodic autocorrelation sequence of $\lambda$. Then, the coding device may determine the code value of the W Doppler frequency bands based on the frequency band distribution indicated by the determined periodic autocorrelation sequence.

The target periodic autocorrelation sidelobe value indicates, after Doppler frequencies corresponding to the candidate code are distributed in the Doppler spectrum based on a frequency band occupation status corresponding to the candidate code, a maximum value of a quantity of overlapping Doppler frequencies of different targets if there are a plurality of targets and a Doppler frequency of one of the targets changes, that is, an occupied Doppler frequency band moves. Optionally, a process of obtaining a periodic autocorrelation code sequence that meets Y+1, Y+2, or the like and that is of $\lambda$, and determining the code value of the W Doppler frequency bands based on the periodic autocorrelation code sequence is similar to a process of obtaining a candidate code and determining the code value of the W Doppler frequency bands based on the candidate code. For details, refer to related descriptions. Details are not described herein.

For a case in which z is greater than or equal to 1, that is, when there is a candidate code that meets (N, W, Y), the coding device may select W Doppler frequency bands from the N Doppler frequency bands, to obtain the frequency band distribution of the W Doppler frequency bands. Then, frequency band distribution that meets the predefined threshold is determined from the frequency band distribution, and is used as distribution of the Doppler frequency band corresponding to each signal sequence. Because there is at least one type of frequency band distribution based on different values of N and W, and each type of frequency band distribution has one candidate code that indicates the type of frequency band distribution, the coding device may determine at least one candidate code based on the at least one type of frequency band distribution.

Optionally, a process of determining the candidate code includes: obtaining an initial code whose code length is N, where one element in the initial code indicates one Doppler frequency band; and determining the candidate code based on the initial code and the frequency band distribution. Because processes of determining corresponding candidate codes based on different types of frequency band distribution are similar, a process of determining a candidate code is explained and described by temporarily using one of the different types of frequency band distribution as an example. For other types of frequency band distribution, refer to related descriptions. For example, based on any type of frequency band distribution, the coding device assigns a first value to elements that correspond to W occupied Doppler frequency bands and that are in the initial code, and assigns a second value to elements that correspond to N-W unoccupied Doppler frequency bands and that are in the initial code, to obtain a candidate code corresponding to the any type of frequency band distribution. The first value and the second value are different values.

That the code length of the initial code is N means that the initial code includes N elements. Herein, a Doppler frequency band corresponding to an element may mean that an arrangement order of the Doppler frequency band in the N Doppler frequency bands is the same as an arrangement order of the element in the initial code. The frequency band distribution specifies Doppler frequency bands, which are occupied by the Doppler frequencies corresponding to the signal sequences, in the N Doppler frequency bands, and Doppler frequency bands that are not occupied by the Doppler frequencies corresponding to the signal sequences. Therefore, based on the occupied Doppler frequency bands indicated by the frequency band distribution, the elements that indicate the occupied Doppler frequency bands and that are in the initial code may be assigned the first value. Based on the unoccupied Doppler frequency bands indicated by the frequency band distribution, the elements that indicate the unoccupied Doppler frequency bands and that are in the initial code may be assigned the second value. In addition, because initial values of the N elements included in the initial code may be any values, and the N elements may be the second value, the coding device only needs to assign the first value to the element corresponding to the occupied Doppler frequency band, and does not need to perform an operation of assigning the second value to the element corresponding to the unoccupied Doppler frequency band.

An example in which the first value is 1, the second value is 0, N is 8, and W is 3 is used. The initial code is {00000000}. The coding device separately selects a first Doppler frequency band, a second Doppler frequency band, and a fourth Doppler frequency band from eight Doppler frequency bands as the Doppler frequency bands occupied by the Doppler frequencies corresponding to the W signal sequences. The elements corresponding to the occupied Doppler frequency bands are assigned the first value based on the frequency band distribution. That is, a first element, a second element, and a fourth element are assigned the value 1, and an obtained candidate code is {11010000}. Certainly, the initial value of the element in the initial code may also be the first value. In this case, the coding device assigns the second value to the element corresponding to the unoccupied Doppler frequency band. In addition, the first value and the second value are not limited in embodiments of this application. As described in the foregoing embodiment, the first value may be 1, and the second value may be 0. Alternatively, the first value and the second value may be another combination of different numbers.

It should be noted that for a new code obtained through cyclic shift performed on a candidate code, because a Doppler spectrum graph itself is also an image that can be cyclically shifted, a frequency band occupation indicated by the shifted code is the same as a frequency band occupation indicated by the candidate code. The candidate code and the shifted code may be considered as equivalent. In this application, the candidate code is temporarily used as an example to describe the process of determining the code value of the W Doppler frequency bands.

After obtaining the at least one candidate code, the coding device starts to calculate a target periodic autocorrelation sidelobe value of the candidate code. Optionally, a related formula for calculating target periodic autocorrelation sidelobe values of two targets is shown as formula 1.

$$\lambda(\tau) = \sum_{t=0}^{n-1} x_t\, x_{t+\tau} \quad (\text{formula 1})$$

$x_t$ represents a first element included in the candidate code. $x_{t+\tau}$ represents a second element included in a code obtained after the candidate code is shifted. N represents the total quantity of frequency bands, and also represents a total quantity of first elements included in the candidate code. $\tau$ represents a quantity of shifted digits shifted to the right. An example in which the candidate code is {11010000} is used, and the code obtained after the candidate code is shifted has the following eight results:

$$\begin{bmatrix} 1 & 1 & 0 & 1 & 0 & 0 & 0 & 0 \\ 0 & 1 & 1 & 0 & 1 & 0 & 0 & 0 \\ 0 & 0 & 1 & 1 & 0 & 1 & 0 & 0 \\ & & & \cdot & & & & \\ & & & \cdot & & & & \\ & & & \cdot & & & & \\ 1 & 0 & 1 & 0 & 0 & 0 & 0 & 1 \end{bmatrix}_{8\times8}$$

The subscript $8\times8$ of the foregoing matrix means that a code length of the shifted code is 8, and there are eight shift cases in total corresponding to one candidate code. For example, when a quantity of shifted digits is 0, the shifted code is {11010000}, and when the quantity of shifted digits is 1, the shifted code is {01101000}. Similar to the candidate code, the shifted code also indicates frequency band distribution.

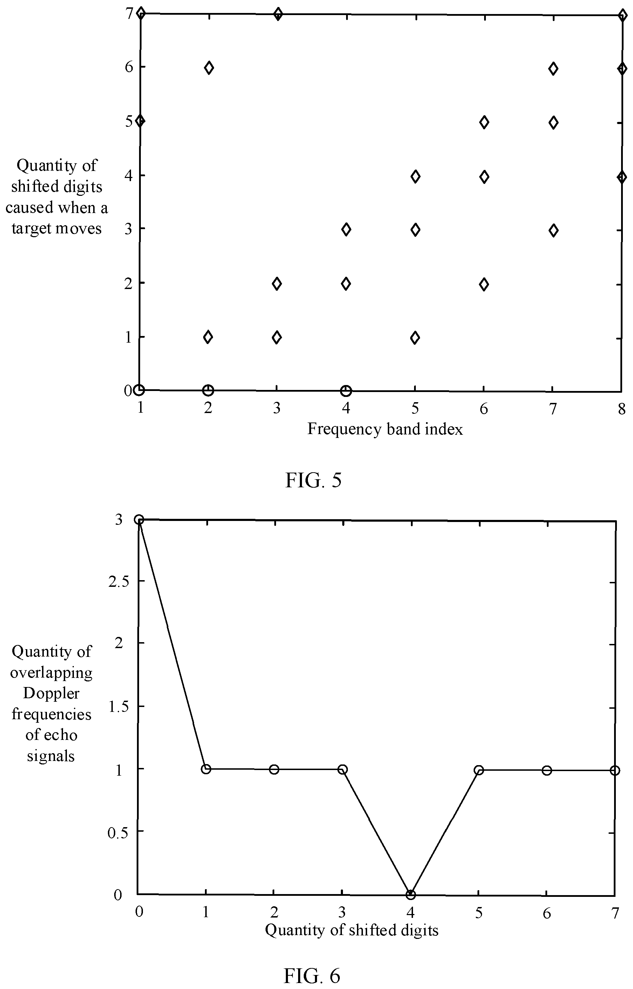

A shift sequence specifies frequency band distribution of a Doppler frequency, corresponding to a signal sequence of another target, on the N equally spaced Doppler frequency bands when the another target exists. A candidate sequence may also indicate frequency band distribution of a Doppler frequency, corresponding to a signal sequence of a target, on a same group of N equally spaced Doppler frequency bands. Therefore, with reference to the candidate sequence and the shift sequence, a frequency band crosstalk status corresponding to the candidate code may be obtained when there are a plurality of targets. FIG. 5 is a diagram of a type of frequency band crosstalk according to an embodiment of this application, and shows the frequency band crosstalk status corresponding to the candidate code {11010000}. In FIG. 5, 1 to 8 that are used as frequency band indexes are used to distinguish different Doppler frequency bands. Circles in FIG. 5 indicate, when a detected target is still, Doppler frequency bands occupied by Doppler frequencies corresponding to three signal sequences of the target, that is, frequency band distribution indicated by the candidate code. Diamonds in FIG. 5 indicate, when the detected target moves, Doppler frequency bands occupied by the Doppler frequencies corresponding to the three signal sequences of the target, that is, frequency band distribution indicated by the shifted code.

Refer to FIG. 5. When a speed of the detected target is aliased once, a corresponding quantity of shifted digits is 1. In this case, the Doppler frequencies corresponding to the three signal sequences also change. The change in the Doppler spectrum graph is that the Doppler frequencies corresponding to the three signal sequences are sequentially translated to three Doppler frequency bands 2, 3, and 5, that is, the frequency band distribution indicated by the shifted code {01101000}. A translation status indicated by other diamonds in FIG. 5 is similar to a translation status existing when the speed of the target is aliased once. Details are not described herein. In addition, when a second target is still, a quantity of shifted digits of the second target is 0, and frequency band distribution is consistent with circle distribution shown in FIG. 5, and is not repeatedly indicated by diamonds.

After generating, based on the candidate code, the shifted code corresponding to the candidate code, the coding device may calculate an initial periodic autocorrelation sidelobe value of the candidate code based on the shifted code, to determine a target periodic autocorrelation sidelobe value of the candidate code based on the initial periodic autocorrelation sidelobe value of the candidate code. An example in which a quantity $\tau$ of shifted digits is 1 is used as an example. The candidate code is { 11010000}, and the shifted code obtained by shifting 1 digit to the right is {01101000}. Therefore, the initial periodic autocorrelation sidelobe value is obtained by multiplying each first element $x_t$ in the candidate code by a second element $x_{t+\tau}$, corresponding to $x_t$, in the shifted code, to obtain a plurality of products, and then calculating a sum of the plurality of products.

Optionally, the second element corresponding to the first element means that the first element and the second element indicate a same Doppler frequency band. In a possible case, when an arrangement order of the second element in the shifted code is the same as an arrangement order of the first element in the candidate code, the second element and the first element indicate a same Doppler frequency band, and are corresponding elements. $\lambda(1)=\{11010000\}\odot\{01101000\}=sum(\{0\ 1\ 0\ 0\ 0\ 0\ 0\ 0\})=1$ is based through calculation according to the formula 1. $\odot$ means point multiplication, and sum means summation.

An example in which the first value is 1, the second value is 0, and the quantity of shifted digits is 1 is used to explain a calculation principle of the foregoing formula 1. The first element equal to 1 in the candidate code indicates that a Doppler frequency band corresponding to the first element is occupied by a Doppler frequency of an echo sequence of a target A. The second element equal to 1 in the shifted code also indicates that a Doppler frequency band corresponding to the second element is occupied by a Doppler frequency of a target B. For a Doppler frequency band, if the Doppler frequency band is occupied by Doppler frequencies of the echo sequence of the target A and the echo sequence of the target B, that is, Doppler frequencies of different echo sequences of the target A and the target B are the same, frequency band crosstalk exists on the Doppler frequency band. In addition, because both the first element and the second element that correspond to the Doppler frequency band are 1, a product obtained by multiplying the two elements is equal to 1. If a Doppler frequency band is not occupied by the Doppler frequencies of the echo sequences of the target A and the target B at the same time, for example, is occupied only by the Doppler frequency of the echo sequence of one target, or is not occupied by the Doppler frequencies of the echo sequences of the two targets, that is, frequency band crosstalk does not exist on the Doppler frequency band, a product obtained by multiplying the two elements is equal to 0 because at least one element is 0.

It may be understood that the product obtained by multiplying the corresponding first element by the second element can reflect whether frequency band crosstalk occurs on the Doppler frequency bands corresponding to the two elements. For example, {01000000} in the foregoing example indicates that frequency band crosstalk exists on a second Doppler frequency band. Therefore, a quantity of Doppler frequency bands on which frequency band crosstalk occurs may be directly determined based on a product, and is used as the initial periodic autocorrelation sidelobe value. For a case in which the first value is set to 1 and the second value is set to 0, a value indicating that frequency band crosstalk exists is 1, and a value indicating that frequency band crosstalk does not exist is 0. Therefore, a sum of products is a sum obtained when there is at least one 1, the sum of the products is equal to the quantity 1, and the sum of the products may be directly used as the initial periodic autocorrelation sidelobe value, which is convenient for operating.

The initial periodic autocorrelation sidelobe value can be calculated by using the formula 1 when the other target moves at different speeds, that is, in a case of different quantities of shifted digits. In a possible case, for a same candidate code, if quantities of shifted digits for the candidate code are different, the initial periodic autocorrelation sidelobe values obtained through calculation are also different. The candidate code and the shifted code shown in FIG. 5 are still used as an example. Initial periodic autocorrelation sidelobe values for which quantities of shifted digits are different are determined by using a statistical diagram. When the quantity of shifted digits is 4, that is, an example in which the target A in the two detected targets is still, and a movement speed of the target B is aliased for four times is used, Doppler frequencies of echo sequences of the target A separately occupy three Doppler frequency bands 1, 2, and 4, and Doppler frequencies of echo sequences of the target B separately occupy three Doppler frequency bands 5, 6, and 8. The Doppler frequency of the echo sequence of the target A and the Doppler frequency of the echo sequence of the target B do not overlap. The quantity of Doppler frequency band on which frequency band crosstalk occurs is 0. The initial periodic autocorrelation sidelobe value of the candidate code is 0, which is different from an initial periodic autocorrelation sidelobe value for which the quantity of shifted digits is 1. For a frequency band crosstalk status caused by another movement situation, refer to FIG. 5. Details are not described herein. Based on frequency band crosstalk statuses caused by different movement situations of the statistical target in FIG. 5, a statistical diagram of an initial periodic autocorrelation sidelobe value is obtained, as shown in FIG. 6. With reference to FIG. 6, it may be found that with different quantities of shifted digits, initial periodic autocorrelation sidelobe values of a same candidate code are different.

The initial periodic autocorrelation sidelobe values obtained through calculation based on different quantities of shifted digits may be different. However, when the coding device screens the candidate code, it is required to ensure that, regardless of how the second target moves, a frequency band crosstalk quantity does not exceed the predefined threshold based on frequency band distribution corresponding to the candidate code. Therefore, the coding device selects a maximum initial periodic autocorrelation sidelobe value from a plurality of initial periodic autocorrelation sidelobe values of the candidate code as the target periodic autocorrelation sidelobe value $\lambda$, and compares the target periodic autocorrelation sidelobe value $\lambda$ with the predefined threshold, and further determines a candidate code whose $\lambda$ is less than or equal to the predefined threshold, that is, a candidate code that meets (N, W, Y). In addition, in this application, reducing a quantity of overlapping Doppler frequencies corresponding to different signal sequences of different targets is considered. However, a case in which the quantity of shifted digits is 0 is that Doppler frequencies corresponding to a same signal sequence of different targets overlap. Therefore, when the target periodic autocorrelation sidelobe value is selected, the initial periodic autocorrelation sidelobe value corresponding to the case in which the quantity of shifted digits is 0 is not considered.

After the at least one candidate code is screened through the foregoing screening operations, one candidate code may be selected as the code value of the W Doppler frequency bands based on the candidate codes obtained through screening. The candidate code may be selected randomly, or may be selected based on a location of the first value in the candidate code. Alternatively, a candidate code with a minimum target periodic autocorrelation sidelobe value is selected based on a magnitude of the target periodic autocorrelation sidelobe value. This is not limited in embodiments of this application. The minimum target periodic autocorrelation sidelobe value may be that the target periodic autocorrelation sidelobe value of the candidate code is less than a target periodic autocorrelation sidelobe value of another candidate code, or may be that a quantity of target periodic autocorrelation sidelobe values of the candidate code is less than a quantity of target periodic autocorrelation sidelobe values of another candidate code. The quantity of target periodic autocorrelation sidelobe values is a quantity of initial periodic autocorrelation sidelobe values that have a same magnitude as that of the target periodic autocorrelation sidelobe value in the candidate code.

When a frequency band occupation status of the transmit antenna array is a status in which the first, the second, and the fourth Doppler frequency bands in the foregoing example are occupied by the Doppler frequencies corresponding to the signal sequences, a Doppler spectrum of the transmit antenna array is that shown in FIG. 4. The transmit antenna array includes three transmit antennas: the transmit antenna 0, the transmit antenna 1, and the transmit antenna 2. A horizontal axis of the Doppler spectrum corresponding to the transmit antenna array indicates a frequency, and the frequency is divided into eight equally spaced Doppler frequency bands. The Doppler frequency corresponding to the transmit antenna 0 occupies the first Doppler frequency band, the Doppler frequency corresponding to the transmit antenna 1 occupies the second Doppler frequency band, and the Doppler frequency corresponding to the transmit antenna 2 occupies the fourth Doppler frequency band. Remaining five Doppler frequency bands are not used. However, it can be learned from the initial periodic autocorrelation sidelobe value of each quantity of shifted digits shown in FIG. 6 that when the Doppler frequencies of the transmit antenna array are distributed, based on spectrum distribution shown in FIG. 4, on the eight equally spaced Doppler frequency bands, even if a to-be-detected target is moving, frequency band crosstalk occurs on a maximum of one Doppler frequency band, and a quantity of Doppler frequency bands on which frequency band crosstalk occurs can be effectively controlled. This reduces impact of frequency band crosstalk.

Based on the foregoing example, it may be understood that when the Doppler frequencies corresponding to the W signal sequences are distributed in the Doppler spectrum based on the code value of the W Doppler frequency bands, the quantity of overlapping Doppler frequencies can be effectively reduced, and impact of frequency band crosstalk can be reduced. However, the occupied Doppler frequency band determined in the foregoing embodiment is a Doppler frequency band occupied by a Doppler frequency of an echo sequence in the Doppler spectrum after two-dimensional FFT processing is performed on the echo sequence. The Doppler frequency band occupied by the Doppler frequency of the echo sequence is related to a phase of a signal sequence corresponding to the echo sequence. Therefore, the phase used for each signal sequence corresponding to an occupation status of the frequency band needs to be further determined, so that the Doppler frequencies corresponding to the signal sequences of the transmit antennas can be distributed in the Doppler spectrum based on the frequency band distribution indicated by the code value of the W Doppler frequency bands.

For example, the phase used for any signal sequence in the W signal sequences is determined based on the code value of the W Doppler frequency bands and an angle offset value corresponding to the any signal sequence. The angle offset value is obtained by dividing, into N equal parts, an angle period corresponding to the any signal sequence. Based on a case in which the W signal sequences are obtained through modulation performed on the initial signal based on different phases, the angle period corresponding to the any signal sequence is an angle period of the initial signal corresponding to the any signal sequence. The angle period of the initial signal is an angle of a phase change of the initial signal when one period of signal change is completed for the initial signal serving as a periodic signal. The angle period is, for example, 360 degrees (°).

In a possible implementation, that the phase used for any signal sequence is determined based on the code value of the W Doppler frequency bands and an angle offset value corresponding to the any signal sequence is performed by the coding device. The angle period of the initial signal is divided by N, an obtained quotient is used as a difference between adjacent angles included in a division result, and all angle offset values included in the division result are obtained based on an initial value of the angle period and the difference between the adjacent angles, to obtain N equally spaced angle offset values. An equal spacing herein means that differences between offset values of any two adjacent angles are equal. An example in which the angle period of the initial signal is 360°, the initial value is 0°, and N is 8 is used. The quotient obtained through calculation is 45°, and the eight equally spaced angle offset values are: 0°, 45°, 90°, 135°, 180°, 225°, 270°, and 315°.

Then, the coding device may determine, based on the N angle offset values and the code value of the W Doppler frequency bands, the phase used for the signal sequence. The code value of the W Doppler frequency bands is used to determine an angle offset value corresponding to any signal sequence, the angle offset value corresponding to the any signal sequence is used to determine a phase code sequence, and the phase code sequence indicates a phase used for the any signal sequence at different time. Optionally, a process of determining the angle offset value corresponding to the any signal sequence includes: determining an arrangement order of a Doppler frequency band, which matches the any signal sequence, in the code value of the W Doppler frequency bands; and selecting, from the division result, the angle offset value that matches the arrangement order as the angle offset value corresponding to the any signal sequence.

A manner of matching a signal sequence with a Doppler frequency band is not limited in embodiments of this application. The coding device may determine an arrangement order of each signal sequence, and determine, based on the arrangement order of each signal sequence, a Doppler frequency band that matches each signal sequence. The arrangement order of each signal sequence may be determined based on an identifier of a transmit antenna that transmits the signal sequence. Optionally, the identifier of the transmit antenna includes a number. For example, identifiers of three transmit antennas included in the transmit antenna array are: TX0, TX1, and TX2. In this case, the three transmit antennas may be arranged in sequence based on the numbers 0, 1, and 2 in the identifiers, to obtain arrangement orders of the signal sequences transmitted by the three transmit antennas.

A manner of determining the matched Doppler frequency band based on the arrangement order of the signal sequence is, for example, to determine that a Doppler frequency band corresponding to a first element of the first value in the code value of the W Doppler frequency bands is a Doppler frequency band that matches the signal sequence whose arrangement order is the first. Remaining signal sequences may be deduced by analogy. An example in which the code value of the W Doppler frequency bands is {11010000} is used. A Doppler frequency band matching a signal sequence of TX0 is a Doppler frequency band corresponding to a first element, and an arrangement order of the Doppler frequency band is the first. A Doppler frequency band matching a signal sequence of TX1 is a Doppler frequency band corresponding to a second element, and an arrangement order of the Doppler frequency band is the second. A Doppler frequency band matching a signal sequence of TX2 is a Doppler frequency band corresponding to a fourth element, an arrangement order of the Doppler frequency bands is the fourth.

Certainly, the coding device may alternatively determine, according to a random matching principle, a Doppler frequency band that matches a signal sequence, and then determine an arrangement order of the matched Doppler frequency band on the N Doppler frequency bands. In other words, in a process of determining the Doppler frequency band that matches the signal sequence, a matching principle followed by the coding device is actually a one-to-one matching principle. A manner based on which a correspondence is determined is not limited in embodiments of this application.

After arrangement orders of the Doppler frequency bands that match the signal sequences is determined, angle offset values that have a same arrangement order are selected as phase increments of phase code sequences of the signal sequences based on arrangement orders of a plurality of angle offset values in the division result. The division result of 0°, 45°, 90°, 135°, 180°, 225°, 270°, and 315° is used as an example. In the foregoing embodiment, the arrangement order of the Doppler frequency band that matches the signal sequence of TX0 is 1, a first angle offset value of 0° in the division result is selected as the phase increment, and it is determined that the phase code sequence of the signal sequence of TX0 is $c_0=[0°, 0°, 0°, 0°, 0°, 0°, 0°, 0°]$. The arrangement order of the Doppler frequency band that matches the signal sequence of TX1 is 2, a second angle offset value of 45° in the division result is selected as the phase increment, and it is determined that the phase code sequence of the signal sequence of TX1 is $c_1=[0°, 45°, 90°, 135°, 180°, 225°, 270°, 315°]$. The arrangement order of the Doppler frequency band that matches the signal sequence of TX2 is 4, a fourth angle offset value of 135° in the division result is selected as the phase increment, and it is determined that the phase code sequence of the signal sequence of TX2 is $c_2=[0°, 135°, 270°, 45°, 180°, 315°, 90°, 225°]$.

The phase code sequence of any signal sequence means that the signal sequence is obtained through modulation performed on the initial signal based on phases indicated by the phase code sequence. The signal sequence of the transmit antenna TX1 is used as an example for description. A phase used for a signal sequence transmitted by the TX1 for a first time, for example, a first transmission period, is 0°, a phase used for a signal sequence transmitted for a second time is 45°, and a phase used for a signal sequence transmitted for a third time is 90°. The phase used for the signal sequence at different moments may be determined based on the phase code sequence. When the signal sequence is a sequence obtained through modulation performed based on the phase indicated by the phase code sequence, a Doppler frequency band occupied by a Doppler frequency corresponding to the signal sequence is a Doppler frequency band indicated by the code value of the W Doppler frequency bands.

The foregoing describes, by using an example, a process in which the coding device determines the phase used for each signal sequence. In a possible implementation, after determining the phase code sequence, the coding device sends the phase code sequence of each signal sequence to the radar system. The phase code sequence of each signal sequence is used by the radar system to perform phase shifting processing on the initial signal, so that the transmit antenna array can receive the signal sequence obtained through modulation, and transmit the signal sequence to the outside. For example, the coding device separately sends the phase code sequence of each signal sequence to a phase shifter corresponding to each transmit antenna, and the phase shifter performs phase shifting processing on the received initial signal based on the phases indicated by the phase code sequence, to implement signal modulation. Then, each phase shifter sends the signal sequence obtained through phase shifting to the transmit antenna array. The transmit antenna array radiates the signal sequence into space by using the W transmit antennas included in the transmit antenna array, to perform target speed estimation.

It should be noted that the foregoing example is intended to describe the process of determining the phase used for the signal sequence, instead of limiting a total quantity N of frequency bands and a quantity W of frequency bands that need to be occupied, and there may be a plurality of cases for the determined code value of the W Doppler frequency bands. For example, for a case in which N is 8, W is 3, and the predefined threshold is 1, in addition to {11010000} in the foregoing embodiment, the code value of the W Doppler frequency bands may be {11000010}. Alternatively, when the method in this application is used to determine phases used for four signal sequences based on a limitation that N is 16, W is 4, and the predefined threshold is 1, the code value of the W Doppler frequency bands involved in the phase determining process may be any one of {1101000100000000}, {1101000000001000}, {1100101000000000}, {1100100000010000}, {1100010100000000}, {1100010000000010}, {1100001000000100}, {1100000000101000}, {1100000000100010}, {1100000000010100}, {1011000100000000}, and {1011000000001000}. This is not limited in embodiments of this application. One element in the foregoing example code value of the W Doppler frequency bands corresponds to one Doppler frequency band. 1 is the first value indicating that the corresponding Doppler frequency band is occupied by the Doppler frequency corresponding to the signal sequence. 0 is the second value indicating that the corresponding Doppler frequency band is not occupied by the Doppler frequency corresponding to the signal sequence.

In addition, an expression manner of the code value of the W Doppler frequency bands in embodiments of this application may be a binary code value that includes "1" and "0" and that is described in the foregoing embodiment, or may be a sequence that is of another code length and that includes another number. For example, when the angle offset value corresponding to any signal sequence is determined based on the code value of the W Doppler frequency bands, a target sequence whose code length is W may be used to express the code value of the W Doppler frequency bands in another manner. The target sequence whose code length is W includes W elements. One element indicates a Doppler frequency band occupied by a Doppler frequency corresponding to a signal sequence. A value of the element indicates an arrangement order, in the N equally spaced Doppler frequency bands, of the Doppler frequency band occupied by the Doppler frequency corresponding to the signal sequence. For example, if the code value of the W Doppler frequency bands is {11010000}, a corresponding target sequence is [1, 2, 4]. Arrangement orders of the W Doppler frequency bands are determined based on the target sequence, to help to subsequently determine, based on the arrangement orders of the W Doppler frequency bands, an angle offset value corresponding to any signal sequence.

In conclusion, according to the signal transmission method provided in embodiments of this application, the predefined threshold reflects the maximum value of a tolerated quantity of overlapping Doppler frequencies. The predefined threshold is used as a constraint, and the phase that is used by each signal sequence and that meets the constraint is determined. After the signal sequence obtained through signal modulation performed based on the determined phase is transmitted, frequency band distribution of a Doppler frequency corresponding to the signal sequence may be optimized. This effectively reduces the quantity of overlapping Doppler frequencies and reduces an impact range of frequency band crosstalk, thereby controlling signal distortion and improving signal quality. Accuracy of a target speed obtained based on a signal of higher quality is also higher. In addition, the used phase is further determined based on the frequency band requirement corresponding to the transmit antenna array, to ensure that the obtained phase is applicable to the transmit antenna array, and universality is wide. For a quantity of transmit antennas, a plurality of code values for the W Doppler frequency bands may be determined, there may also be a plurality of results for the phase used for the signal sequence, and flexibility is high.

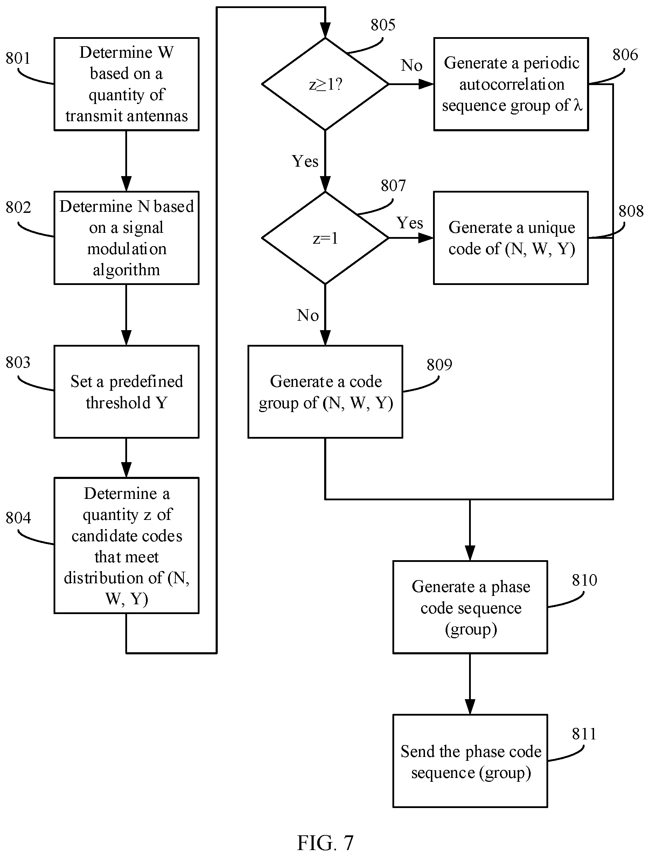

An embodiment of this application provides a phase determining method, used to determine a phase used for a signal sequence transmitted by using the signal transmission method described in the foregoing embodiments. A flowchart of the phase determining method is shown in FIG. 7. The phase determining method may be performed by a coding device.

S801: Determine W based on a quantity of transmit antennas.

Optionally, a process of determining W by the coding device is similar to the process of determining W in S301 in the foregoing embodiments. For details, refer to related descriptions. Details are not described herein again. For example, set W to 4.

S802: Determine N based on a signal modulation algorithm.

Optionally, a process of determining N by the coding device is similar to the process of determining N in S301 in the foregoing embodiments. For details, refer to related descriptions. Details are not described herein again. For example, set N to 16.

S803: Set a predefined threshold Y.

Optionally, a process of determining Y by the coding device is similar to the process of determining Y in S301 in the foregoing embodiments. For details, refer to related descriptions. Details are not described herein again. For example, set Y to 1. In addition, the foregoing operations of S801 to S803 may be synchronously performed, or may be asynchronously performed according to another operation sequence.

S804: Determine a quantity z of candidate codes that meet distribution of (N, W, Y).

Optionally, a process of determining the quantity z of candidate codes that meet distribution of (N, W, Y) is similar to the process of determining the quantity z of candidate codes that meet distribution of (N, W, Y) in S301 in the foregoing embodiments. For details, refer to related descriptions. Details are not described herein again.

S805: Determine whether z is greater than or equal to 1.

Whether z is greater than or equal to 1 is determined. When z is not greater than or equal to 1, that is, there is no candidate code that meets distribution of (N, W, Y), the coding device performs an operation of S806. When z is greater than or equal to 1, an operation of S807 is performed.

S806: The coding device generates a periodic autocorrelation sequence group of λ based on that z is less than 1.

In this case, there is no candidate code that meets the threshold Y, but a candidate code that meets Y+1, Y+2, or the like can still be found. Therefore, a candidate code with a lowest target periodic autocorrelation sidelobe value is stored, and the periodic autocorrelation sequence group of λ is generated. Optionally, a process of generating the periodic autocorrelation sequence group is similar to the process of generating the periodic autocorrelation sequence group in S301 in the foregoing embodiments. For details, refer to related descriptions. Details are not described herein again.

S807: Determine whether z is equal to 1.

Whether z is equal to 1 is determined. If z is equal to 1, the coding device performs an operation of S808. When z is not equal to 1, the coding device performs an operation of S809.

S808: The coding device generates a unique code of (N, W, Y) based on that z is equal to 1.

Optionally, the coding device generates candidate codes, and selects, from the candidate codes, a candidate code that meets distribution of (N, W, Y). Because there is only one candidate code that meets distribution of (N, W, Y), the obtained candidate code that meets distribution of (N, W, Y) is the unique code. The unique code may be directly used as a code value of the W Doppler frequency bands. A process of generating the candidate code is similar to the process of generating the candidate code in S301 in the foregoing embodiments. For details, refer to related descriptions. Details are not described herein again.

S809: The coding device generates a code group of (N, W, Y) based on that z is greater than 1.

Optionally, because z is greater, it indicates that there are a plurality of candidate codes that meet distribution of (N, W, Y), that is, there are a plurality of candidate codes obtained through screening based on the predefined threshold Y. Therefore, the coding device may use each candidate code as the code value of W Doppler frequency bands, to obtain the code group. A process of obtaining the code value by the coding device is similar to the process of generating the unique code in S808. For details refer to related descriptions. Details are not described herein again. Optionally, when N is 16, W is 4, and Y is 1, the code group determined by the coding device includes {1101000100000000}.

S810: Generate a phase code sequence (group) based on the periodic autocorrelation sequence group of λ, the unique code, or the code group.

Optionally, a process of generating the phase code sequence (group) by the coding device is similar to the process of generating the phase code sequence in S301 in the foregoing embodiments. For details, refer to related descriptions. Details are not described herein again. Phase code sequences of the signal sequences generated based on {1101000100000000} are: a phase code sequence [0°, 0°, 0°, 0°, 0°, 0°, 0°, 0°, 0°, 0°, 0°, 0°, 0°, 0°, 0°, 0°] of a signal sequence of a transmit antenna 0, a phase code sequence [0°, 22.5°, 45°, 67.5°, 90°, 112.5°, 135°, 157.5°, 180°, 202.5°, 225°, 247.5°, 270°, 292.5°, 315°, 337.5°] of a signal sequence of a transmit antenna 1, a phase code sequence [0°, 67.5°, 135°, 202.5°, 270°, 337.5°, 45°, 112.5°, 180°, 247.5°, 315°, 22.5°, 90°, 157.5°, 225°, 292.5°] of a signal sequence of a transmit antenna 2, and a phase code sequence [0°, 157.5°, 315°, 112.5°, 270°, 67.5°, 225°, 22.5°, 180°, 337.5°, 135°, 292.5°, 90°, 247.5°, 45°, 202.5°] of a signal sequence of a transmit antenna 3.

S811: The coding device sends the phase code sequence (group).

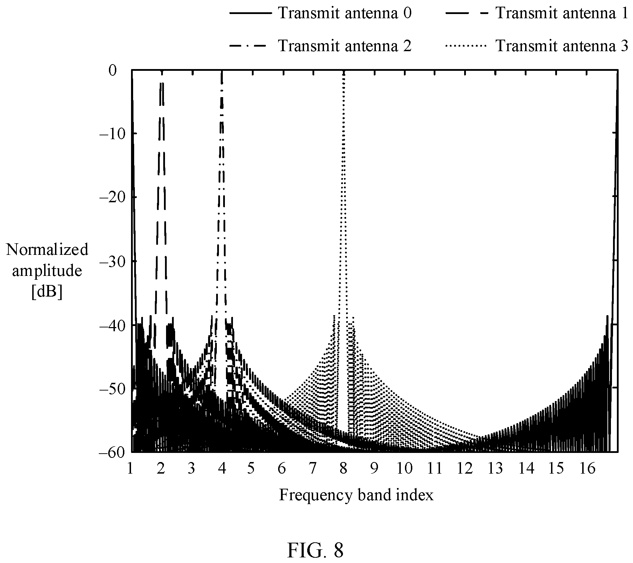

Optionally, a process of sending the generated phase code sequence (group) by the coding device to a radar system is similar to the process of sending the phase code sequence in S301 in the foregoing embodiments. For details, refer to related descriptions. Details are not described herein again. In a possible implementation, after the radar system performs phase modulation based on the four phase code sequences used as examples in S810 to obtain four signal sequences, and transmits the four signal sequences to the outside by using a transmit antenna array, obtained distribution, in a Doppler spectrum, of Doppler frequencies of echo sequences is that shown in FIG. 8. A Doppler frequency of an echo sequence of the transmit antenna 0 occupies a Doppler frequency band whose frequency band index is 1. A Doppler frequency of an echo sequence of the transmit antenna 1 occupies a Doppler frequency band whose frequency band index is 2. A Doppler frequency of an echo sequence of the transmit antenna 2 occupies a Doppler frequency band whose frequency band index is 4. A Doppler frequency of an echo sequence of the transmit antenna 3 occupies a Doppler frequency band whose frequency band index is 8.

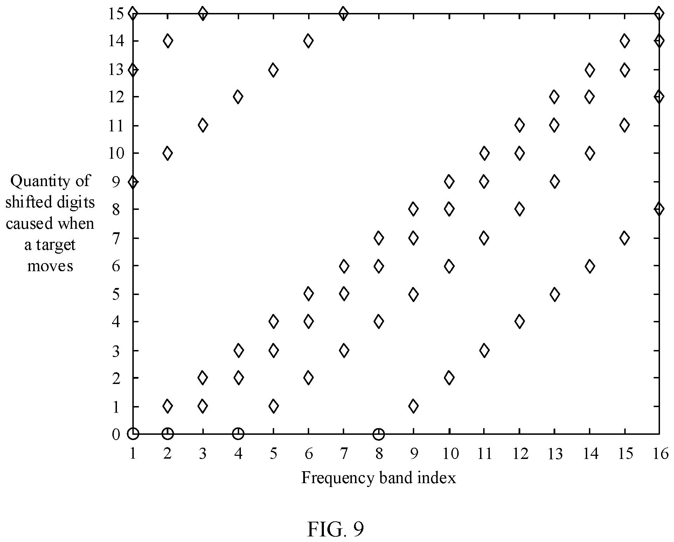

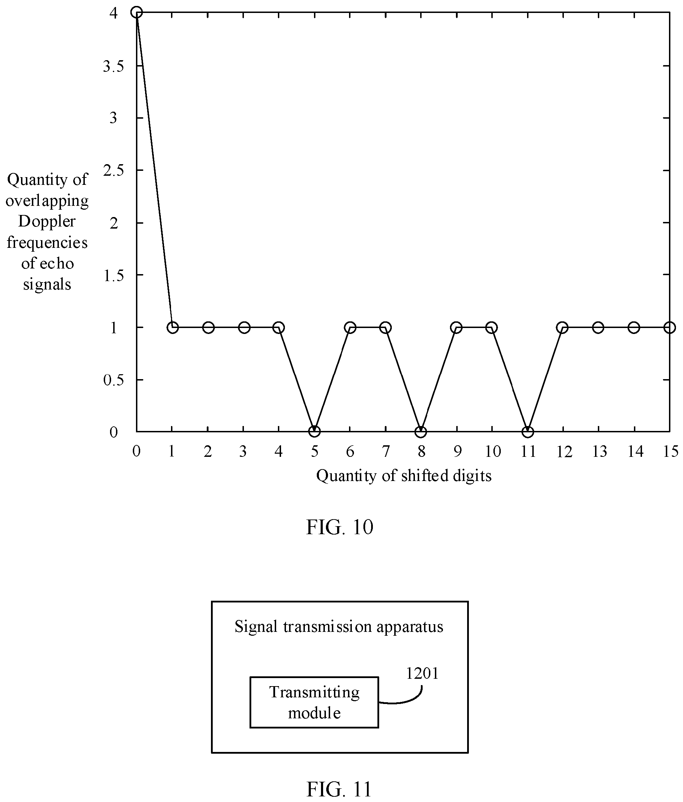

In this type of frequency band distribution, when there is a second moving target, a Doppler frequency band that may be occupied by a Doppler frequency of an echo sequence of the moving target is shown by diamonds in FIG. 9. Meanings indicated by shapes in FIG. 9 are similar to the meaning indicated by the shapes in FIG. 5. For details, refer to related descriptions of FIG. 5. Details are not described herein again. However, a frequency band crosstalk status determined based on FIG. 9 is that counted in FIG. 10. With reference to FIG. 10, when one of two detected targets is still, and the other target is moving, regardless of a speed at which the target moves, a quantity of overlapping Doppler frequencies of echo sequences of the two targets does not exceed 1. This effectively controls a frequency band crosstalk quantity when frequency band offset occurs, thereby reducing impact of frequency band crosstalk.

The foregoing describes the signal transmission method in embodiments of this application. In correspondence with the foregoing method, an embodiment of this application further provides a signal transmission apparatus. FIG. 11 is a diagram of a structure of a signal transmission apparatus according to an embodiment of this application. Based on the following modules shown in FIG. 11, the signal transmission apparatus shown in FIG. 11 can perform all or some operations described in the foregoing embodiments. It should be understood that the apparatus may include more additional modules than the shown modules, or some of the shown modules are omitted. This is not limited in this embodiment of this application. As shown in FIG. 11, the apparatus is used in a transmit antenna array. The transmit antenna array includes W transmit antennas, where W is a positive integer greater than 1. The apparatus includes:
a transmitting module 1201, configured for the W transmit antennas to transmit W signal sequences.

The W signal sequences are obtained through modulation based on different phases. Doppler frequencies corresponding to the W signal sequences are located on W Doppler frequency bands in N equally spaced Doppler frequency bands, where N is a positive integer greater than 1, and N is greater than or equal to W.

A target periodic autocorrelation sidelobe value λ of a code value of the W Doppler frequency bands is less than or equal to a predefined threshold.

In a possible implementation, a phase of any signal sequence in the W signal sequences is determined based on the code value of the W Doppler frequency bands and an angle offset value corresponding to the any signal sequence. The angle offset value is obtained by dividing, into N equal parts, an angle period corresponding to the any signal sequence.

In a possible implementation, N is determined based on a quantity of signal statuses indicated by a signal modulation algorithm of the transmit antenna array. The quantity of signal statuses indicates a quantity of statuses of signals modulated by using the signal modulation algorithm.

In a possible implementation, when the quantity of signal statuses meets a frequency band requirement corresponding to the transmit antenna array, N is the quantity of signal statuses, or when the quantity of signal statuses does not meet a frequency band requirement corresponding to the transmit antenna array, N is a quantity that meets the frequency band requirement and that is obtained through numerical extension performed on the quantity of signal statuses.

In a possible implementation, the code value of the W Doppler frequency bands includes W elements that are assigned a first value and N-W elements that are assigned a second value. One element corresponds to one Doppler frequency band. The first value indicates that the corresponding Doppler frequency band is occupied by the Doppler frequency corresponding to the signal sequence. The second value indicates that the corresponding Doppler frequency band is not occupied by the Doppler frequency corresponding to the signal sequence. The first value and the second value are different values.

In a possible implementation, the predefined threshold is 1.

In a possible implementation, N is 8, W is 3, and the code value of the W Doppler frequency bands is either of {11010000} and {11000010}. One element in the code value of the W Doppler frequency bands corresponds to one Doppler frequency band. 1 is the first value indicating that the corresponding Doppler frequency band is occupied by the Doppler frequency corresponding to the signal sequence. 0 is the second value indicating that the corresponding Doppler frequency band is not occupied by the Doppler frequency corresponding to the signal sequence.

In a possible implementation, the code value of the W Doppler frequency bands is {11010000}, and the phases used for the W signal sequences are [0°, 0°, 0°, 0°, 0°, 0°, 0°, 0°], [0°, 45°, 90°, 135°, 180°, 225°, 270°, 315°], and [0°, 135°, 270°, 45°, 180°, 315°, 90°, 225°].

In a possible implementation, N is 16, W is 4, and the code value of the W Doppler frequency bands is any one of {1101000100000000}, {1101000000001000}, {1100101000000000}, {1100100000010000}, {1100010100000000}, {1100010000000010}, {1100001000000100}, {1100000000101000}, {1100000000100010}, {1100000000010100}, {1011000100000000}, and {1011000000001000}. One element in the code value of the W Doppler frequency bands corresponds to one Doppler frequency band. 1 is the first value indicating that the corresponding Doppler frequency band is occupied by the Doppler frequency corresponding to the signal sequence. 0 is the second value indicating that the corresponding Doppler frequency band is not occupied by the Doppler frequency corresponding to the signal sequence.

In a possible implementation, the code value of the W Doppler frequency bands is {1101000100000000}, and the phases used for the W signal sequences are [0°, 0°, 0°, 0°, 0°, 0°, 0°, 0°, 0°, 0°, 0°, 0°, 0°, 0°, 0°, 0°], [0°, 22.5°, 45°, 67.5°, 90°, 112.5°, 135°, 157.5°, 180°, 202.5°, 225°, 247.5°, 270°, 292.5°, 315°, 337.5°], [0°, 67.5°, 135°, 202.5°, 270°, 337.5°, 45°, 112.5°, 180°, 247.5°, 315°, 22.5°, 90°, 157.5°, 225°, 292.5°], and [0°, 157.5°, 315°, 112.5°, 270°, 67.5°, 225°, 22.5°, 180°, 337.5°, 135°, 292.5°, 90°, 247.5°, 45°, 202.5°].

The target periodic autocorrelation sidelobe value $\lambda$ of the code value of the W Doppler frequency bands reflects a quantity of overlapping Doppler frequencies of different signal sequences of different targets when there are a plurality of targets after the W signal sequences are transmitted. Because $\lambda$ is less than or equal to the predefined threshold, the signal sequences transmitted by the signal transmission apparatus by using this method can effectively control the quantity of overlapping Doppler frequencies, thereby reducing impact of frequency band crosstalk.

It should be understood that when the apparatus provided in FIG. 11 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatus provided in the foregoing embodiment and the method embodiments belong to a same concept. For specific implementation processes thereof, refer to the method embodiments. Details are not described herein.

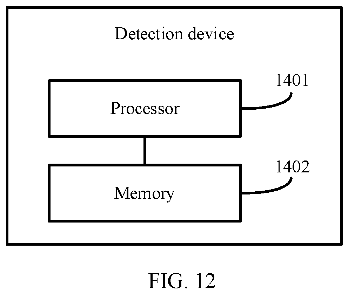

FIG. 12 is a diagram of a structure of a detection device according to an embodiment of this application. The detection device may include one or more processors 1401 and one or more memories 1402. The one or more memories 1402 store at least one computer program, and the at least one computer program is loaded and executed by the one or more processors 1401. The processor 1401 is, for example, a central processing unit (central processing unit, CPU). Certainly, the detection device may further have components such as a wired or wireless network interface, a keyboard, and an input/output interface, to perform input/output. The detection device may further include another component configured to implement a device function. For example, the detection device further includes a transmit antenna array (not shown in FIG. 12). The transmit antenna array includes W transmit antennas. The W transmit antenna is configured to perform the foregoing signal transmission method.

An embodiment of this application further provides a detection device. The detection device includes a transceiver, a memory, and a processor. The transceiver, the memory, and the processor communicate with each other through an internal connection path. The memory is configured to store instructions. The processor is configured to execute the instructions stored in the memory, to control W transmit antennas included in a transmit antenna array in the transceiver to perform the signal transmission method.

It should be understood that the processor may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

An embodiment of this application further provides a computer-readable storage medium. The storage medium stores at least one instruction. The instruction is loaded and executed by a processor, and the processor controls, based on a communication connection, W transmit antennas in a transmit antenna array to implement the foregoing signal transmission method.

An embodiment of this application further provides a computer program (product), including a computer program or instructions. The computer program or the instructions are executed by a processor, so that a computer controls W transmit antennas included in a transmit antenna array to perform corresponding steps and/or procedures in the foregoing method embodiments.

An embodiment of this application further provides a chip. The chip includes a processor, configured to invoke, from a memory, and run instructions stored in the memory. A communication device in which the chip is installed includes a transmit antenna array. The transmit antenna array includes W transmit antennas. The transmit antenna is configured to perform the foregoing signal transmission method.

An embodiment of this application further provides another chip. The chip includes an input interface, an output interface, a processor, and a memory. The input interface, the output interface, the processor, and the memory are connected through an internal connection path. The processor is configured to execute code in the memory. When the code is executed, the processor is configured to control, based on a communication connection, W transmit antennas included in a transmit antenna array to perform any one of the foregoing signal transmission methods.

An embodiment of this application further provides a radar system, including a transmit antenna array. The transmit antenna array includes W transmit antennas. The W transmit antenna is configured to perform any one of the foregoing signal transmission methods.

An embodiment of this application further provides a transmit antenna array. The transmit antenna array includes W transmit antennas. The W transmit antenna is configured to perform any one of the foregoing signal transmission methods.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

**Claims**

1. A signal transmission method, applied to a transmit antenna array, wherein the transmit antenna array comprises W transmit antennas, W is a positive integer greater than 1, and the method comprises:

   transmitting, by the W transmit antennas, W signal sequences, wherein
   the W signal sequences are obtained through modulation based on different phases, Doppler frequencies corresponding to the W signal sequences are located on W Doppler frequency bands in N equally spaced Doppler frequency bands, N is a positive integer greater than 1, and N is greater than or equal to W; and
   a target periodic autocorrelation sidelobe value $\lambda$ of a code value of the W Doppler frequency bands is less than or equal to a predefined threshold.

2. The method according to claim 1, wherein a phase of any signal sequence in the W signal sequences is determined based on the code value of the W Doppler frequency bands and an angle offset value corresponding to the any signal sequence, and the angle offset value is obtained by dividing, into N equal parts, an angle period corresponding to the any signal sequence.

3. The method according to claim 1 or 2, wherein N is determined based on a quantity of signal statuses indicated by a signal modulation algorithm of the transmit antenna array, and the quantity of signal statuses indicates a quantity of statuses of signals modulated by using the signal modulation algorithm.

4. The method according to claim 3, wherein when the quantity of signal statuses meets a frequency band requirement corresponding to the transmit antenna array, N is the quantity of signal statuses, or when the quantity of signal statuses does not meet a frequency band requirement corresponding to the transmit antenna array, N is a quantity that meets the frequency band requirement and that is obtained through numerical extension performed on the quantity of signal statuses.

5. The method according to any one of claims 1 to 4, wherein the code value of the W Doppler frequency bands comprises W elements that are assigned a first value and N-W elements that are assigned a second value, one element corresponds to one Doppler frequency band, the first value indicates that the corresponding Doppler frequency band is occupied by the Doppler frequency corresponding to the signal sequence, the second value indicates that the corresponding Doppler frequency band is not occupied by the Doppler frequency corresponding to the signal sequence, and the first value and the second value are different values.

6. The method according to any one of claims 1 to 5, wherein the predefined threshold is 1.

7. The method according to claim 6, wherein N is 8, W is 3, the code value of the W Doppler frequency bands is either of {11010000} and {11000010}, one element in the code value of the W Doppler frequency bands corresponds to one Doppler frequency band, 1 is the first value indicating that the corresponding Doppler frequency band is occupied by the Doppler frequency corresponding to the signal sequence, and 0 is the second value indicating that the corresponding Doppler frequency band is not occupied by the Doppler frequency corresponding to the signal sequence.

8. The method according to claim 7, wherein the code value of the W Doppler frequency bands is {11010000}, and the phases used for the W signal sequences are [0°, 0°, 0°, 0°, 0°, 0°, 0°, 0°], [0°, 45°, 90°, 135°, 180°, 225°, 270°, 315°], and [0°, 135°, 270°, 45°, 180°, 315°, 90°, 225°].

9. The method according to claim 6, wherein N is 16, W is 4, the code value of the W Doppler frequency bands is any one of {1101000100000000}, {1101000000001000}, {1100101000000000}, {1100100000010000}, {1100010100000000}, {1100010000000010}, {1100001000000100}, {1100000000101000}, {1100000000100010}, {1100000000010100}, {1011000100000000}, and {1011000000001000}, one element in the code value of the W Doppler frequency bands corresponds to one Doppler frequency band, 1 is the first value indicating that the corresponding Doppler frequency band is occupied by the Doppler frequency corresponding to the signal sequence, and 0 is the second value indicating that the corresponding Doppler frequency band is not occupied by the Doppler frequency corresponding to the signal sequence.

10. The method according to claim 9, wherein the code value of the W Doppler frequency bands is {1101000100000000}, and the phases used for the W signal sequences are [0°, 0°, 0°, 0°, 0°, 0°, 0°, 0°, 0°, 0°, 0°, 0°, 0°, 0°, 0°, 0°], [0°, 22.5°, 45°, 67.5°, 90°, 112.5°, 135°, 157.5°, 180°, 202.5°, 225°, 247.5°, 270°, 292.5°, 315°, 337.5°], [0°, 67.5°, 135°, 202.5°, 270°, 337.5°, 45°, 112.5°, 180°, 247.5°, 315°, 22.5°, 90°, 157.5°, 225°, 292.5°], and [0°, 157.5°, 315°, 112.5°, 270°, 67.5°, 225°, 22.5°, 180°, 337.5°, 135°, 292.5°, 90°, 247.5°, 45°, 202.5°].

11. A signal transmission apparatus, wherein the apparatus is used in a transmit antenna array, the transmit antenna array comprises W transmit antennas, W is a positive integer greater than 1, and the apparatus comprises:

a transmitting module, configured for the W transmit antennas to transmit W signal sequences, wherein
the W signal sequences are obtained through modulation based on different phases, Doppler frequencies corresponding to the W signal sequences are located on W Doppler frequency bands in N equally spaced Doppler frequency bands, N is a positive integer greater than 1, and N is greater than or equal to W; and
a target periodic autocorrelation sidelobe value λ of a code value of the W Doppler frequency bands is less than or equal to a predefined threshold.

12. The apparatus according to claim 11, wherein a phase of any signal sequence in the W signal sequences is determined based on the code value of the W Doppler frequency bands and an angle offset value corresponding to the any signal sequence, and the angle offset value is obtained by dividing, into N equal parts, an angle period corresponding to the any signal sequence.

13. The apparatus according to claim 11 or 12, wherein N is determined based on a quantity of signal statuses indicated by a signal modulation algorithm of the transmit antenna array, and the quantity of signal statuses indicates a quantity of statuses of signals modulated by using the signal modulation algorithm.

14. The apparatus according to claim 13, wherein when the quantity of signal statuses meets a frequency band requirement corresponding to the transmit antenna array, N is the quantity of signal statuses, or when the quantity of signal statuses does not meet a frequency band requirement corresponding to the transmit antenna array, N is a quantity that meets the frequency band requirement and that is obtained through numerical extension performed on the quantity of signal statuses.

15. The apparatus according to any one of claims 11 to 14, wherein the code value of the W Doppler frequency bands comprises W elements that are assigned a first value and N-W elements that are assigned a second value, one element corresponds to one Doppler frequency band, the first value indicates that the corresponding Doppler frequency band is occupied by the Doppler frequency corresponding to the signal sequence, the second value indicates that the corresponding Doppler frequency band is not occupied by the Doppler frequency corresponding to the signal sequence, and the first value and the second value are different values.

16. The apparatus according to any one of claims 11 to 15, wherein the predefined threshold is 1.

17. The apparatus according to claim 16, wherein N is 8, W is 3, the code value of the W Doppler frequency bands is either of {11010000} and {11000010}, one element in the code value of the W Doppler frequency bands corresponds to one Doppler frequency band, 1 is the first value indicating that the corresponding Doppler frequency band is occupied by the Doppler frequency corresponding to the signal sequence, and 0 is the second value indicating that the corresponding Doppler frequency band is not occupied by the Doppler frequency corresponding to the signal sequence.

18. The apparatus according to claim 17, wherein the code value of the W Doppler frequency bands is {11010000}, and the phases used for the W signal sequences are [0°, 0°, 0°, 0°, 0°, 0°, 0°, 0°], [0°, 45°, 90°, 135°, 180°, 225°, 270°, 315°], and [0°, 135°, 270°, 45°, 180°, 315°, 90°, 225°].

19. The apparatus according to claim 16, wherein N is 16, W is 4, the code value of the W Doppler frequency bands is any one of {1101000100000000}, {1101000000001000}, {1100101000000000}, {1100100000010000}, {1100010100000000}, {1100010000000010}, {1100001000000100}, {1100000000101000}, {1100000000100010}, {1100000000010100}, {1011000100000000}, and {1011000000001000}, one element in the code value of the W Doppler frequency bands corresponds to one Doppler frequency band, 1 is the first value indicating that the corresponding Doppler frequency band is occupied by the Doppler frequency corresponding to the signal sequence, and 0 is the second value indicating that the corresponding Doppler frequency band is not occupied by the Doppler frequency corresponding to the signal sequence.

20. The apparatus according to claim 19, wherein the code value of the W Doppler frequency bands is {1101000100000000}, and the phases used for the W signal sequences are [0°, 0°, 0°, 0°, 0°, 0°, 0°, 0°, 0°, 0°, 0°, 0°, 0°, 0°, 0°, 0°], [0°, 22.5°, 45°, 67.5°, 90°, 112.5°, 135°, 157.5°, 180°, 202.5°, 225°, 247.5°, 270°, 292.5°, 315°, 337.5°], [0°, 67.5°, 135°, 202.5°, 270°, 337.5°, 45°, 112.5°, 180°, 247.5°, 315°, 22.5°, 90°, 157.5°, 225°, 292.5°], and [0°, 157.5°, 315°, 112.5°, 270°, 67.5°, 225°, 22.5°, 180°, 337.5°, 135°, 292.5°, 90°, 247.5°, 45°, 202.5°].

21. A transmit antenna array, wherein the transmit antenna array comprises W transmit antennas, and the transmit antenna is configured to implement the signal transmission method according to any one of claims 1 to 10.

22. A radar system, wherein the radar system comprises a transmit antenna array, the transmit antenna array comprises W transmit antennas, and the transmit antenna is configured to implement the signal transmission method according to any one of claims 1 to 10.

Transmit antenna
array 11

Transmit
antenna

Signal
sequence 1

Transmit
antenna

Signal
sequence 2

Transmit
antenna

Signal
sequence W

FIG. 1

Radar system

FIG. 2

FIG. 3

FIG. 4

FIG. 5

FIG. 6

801 — Determine W based on a quantity of transmit antennas

802 — Determine N based on a signal modulation algorithm

803 — Set a predefined threshold Y

804 — Determine a quantity z of candidate codes that meet distribution of (N, W, Y)

805 — $z \geq 1$?

No → 806 — Generate a periodic autocorrelation sequence group of $\lambda$

Yes → 807 — $z = 1$

Yes → 808 — Generate a unique code of (N, W, Y)

No → 809 — Generate a code group of (N, W, Y)

810 — Generate a phase code sequence (group)

811 — Send the phase code sequence (group)

FIG. 7

FIG. 8

FIG. 9

FIG. 10

FIG. 11

Detection device

Processor 1401

Memory 1402

FIG. 12

## INTERNATIONAL SEARCH REPORT

| International application No. |
| --- |
| **PCT/CN2022/132983** |

| A. | CLASSIFICATION OF SUBJECT MATTER |
| --- | --- |

G01S7/36(2006.01)i

According to International Patent Classification (IPC) or to both national classification and IPC

| B. | FIELDS SEARCHED |
| --- | --- |

Minimum documentation searched (classification system followed by classification symbols)

IPC：G01S，H04W

Documentation searched other than minimum documentation to the extent that such documents are included in the fields searched

Electronic data base consulted during the international search (name of data base and, where practicable, search terms used)

CNTXT, ENTXTC, WPABSC, IEEE: 相同, 等间隔, 均匀, 多普勒, 雷达, 旁瓣, 相位, 序列, 自相关, 阈值, equal, interval, doppler, radar, sidelobe, phase, code, sequence, threshold, autocorrelation

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2022171048 A1 (PANASONIC INTELLECTUAL PROPERTY MANAGEMENT CO., LTD.) 02 June 2022 (2022-06-02)<br>description, paragraphs [0079]-[0152] | 1-22 |
| Y | CN 101813768 A (INSTITUTE OF ELECTRONICS, CHINESE ACADEMY OF SCIENCES) 25 August 2010 (2010-08-25)<br>description, paragraphs [0005]-[0037] | 1-22 |
| Y | US 2022187440 A1 (PANASONIC INTELLECTUAL PROPERTY MANAGEMENT CO., LTD.) 16 June 2022 (2022-06-16)<br>description, paragraphs [0069]-[0183] | 1-22 |
| Y | US 2021341604 A1 (RAYTHEON CO.) 04 November 2021 (2021-11-04)<br>description, paragraphs [0005]-[0024] | 1-22 |
| A | US 2022107402 A1 (PANASONIC INTELLECTUAL PROPERTY MANAGEMENT CO., LTD.) 07 April 2022 (2022-04-07)<br>entire document | 1-22 |
| A | US 2019227143 A1 (LINDENFELD, M. J.) 25 July 2019 (2019-07-25)<br>entire document | 1-22 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 July 2023** | **26 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| US | 2022171048 | A1 | 02 June 2022 | JP | 2022085412 | A | 08 June 2022 |
| CN | 101813768 | A | 25 August 2010 | None | | | |
| US | 2022187440 | A1 | 16 June 2022 | JP | 2022092247 | A | 22 June 2022 |
| US | 2021341604 | A1 | 04 November 2021 | WO | 2021221962 | A1 | 04 November 2021 |
| US | 2022107402 | A1 | 07 April 2022 | DE | 112020002970 | T5 | 10 March 2022 |
| | | | | JP | 2020148754 | A | 17 September 2020 |
| | | | | WO | 2020255857 | A1 | 24 December 2020 |
| | | | | CN | 114026455 | A | 08 February 2022 |
| US | 2019227143 | A1 | 25 July 2019 | None | | | |

Form PCT/ISA/210 (patent family annex) (July 2022)